# EUROPEAN PATENT APPLICATION

(11) **EP 4 567 084 A1**
(43) Date of publication of application: **11.06.2025**
(21) Application number: 23307125.7
(22) Date of filing: 04.12.2023
(51) Int. Cl.: C09J 4/00, C08F 222/32

(54) **COMPOSITION COMPRISING N-HEPTYLCYANOACRYLATE**

(71) Applicant: Bostik SA, 92800 Puteaux (FR)
(72) Inventor: GARRA, Patxi, 08193 Bellaterra, Barcelona (ES); FAGGI, Enrico, 08193 Bellaterra, Barcelona (ES); PÉREZ DORADO, Eva, 08193 Bellaterra, Barcelona (ES)
(74) Representative: Arkema Patent

(57) **Abstract**

The present invention relates to a composition comprising:
- n-heptylcyanoacrylate;
- a cyanoacrylate B having the following formula (I) or (II):

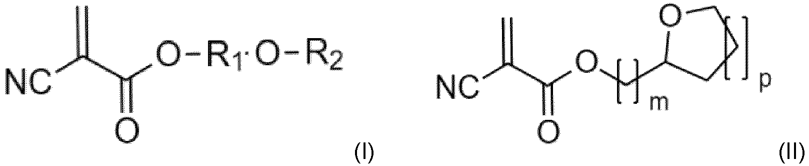

## Description

### FIELD

The present invention relates to a composition comprising n-heptylcyanoacrylate.

### BACKGROUND

In industrial adhesives (automotive, maintenance repair and overhaul, luxury, medical devices, consumer electronics,..) different type of adhesives are commonly used. There exist hot melt reactive polyurethane compositions (HMPUR) which require heavy equipment, heat solicitation of substrates and involve isocyanates which are to be avoided. Two-part compositions based on methylmethacrylate are also used in these fields, but raise problems of heavy equipment, oxygen inhibition, slow speed of cure and presence of peroxide for the curing. Besides UV technology is also encountered in industrial adhesives, but is not adapted to all kind of substrates such as opaque substrates.

Adhesive compositions based on cyanoacrylate (CA) esters are well-known, e.g. as instant adhesives or so-called 'superglues'. They are popular in many areas of application and are used by consumers, professional craft workers and industrial assemblers. They are typically solvent free, 100% reactive materials, noted for their ability to form strong adhesive bonds on many different substrates rapidly.

Single component cyanoacrylates (1K) are particularly effective solutions due to ease of use for manual, semi-automatic and automatic dispensing solutions. While highly popular in many markets, industrial assemblers of the electronics industry are highly reluctant to use them. Several technical limitations are seen in existing cyanoacrylate compositions: Blooming and durability performance of the adhesive joint under high temperature and high relative humidity.

Blooming is a problem in industrial adhesives. Blooming can be described as uncured monomer evaporating from bond line/squeeze out and getting polymerized around the adhesive joint by ambient humidity/nucleophile present on substrates. This is a particularly difficult problem in electronics assembly as the oligomers polymerizing on the substrates can compromise electrical condition further needed on PCB boards. Also, aspect of assembly is whitish which is not desired by users.

While low blooming solutions are gaining more and more market share, those solutions remain imperfect as their static durability performance is extremely poor, even when introducing components known to skilled person in the art to boost thermal and/or humidity resistance (anhydrides, benzonitriles, acrylates, etc...).

Besides, actual solutions do not provide good resistance to impact, high shear strength, smooth peel strength, or good resistance to impact.

There is a need to overcome at least partially one of the above-mentioned drawbacks. There is in particular a need for a composition exhibiting good resistance to impact.

There is a need for a composition exhibiting a good resistance to impact and high resistance to both high temperature (such as for example up to 85°C) and high relative humidity (such as for example up to 85%).

More particularly, there is a need for a fast composition exhibiting a good compromise of low blooming, high tensile strength (for example higher than or equal to 9MPa), good impact resistance, and high resistance to both high temperature (such as for example up to 85°C) and high relative humidity (such as for example up to 85%).

### DESCRIPTION OF THE INVENTION

### Composition

The present invention relates to a composition comprising:
- n-heptylcyanoacrylate;
- a cyanoacrylate B having the following formula (I) or (II): 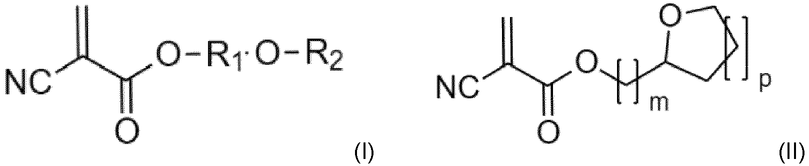 wherein:
   ∘ R¹ represents C1-C8 optionally substituted divalent hydrocarbon group,
   ∘ R² is Si(CH₃)₃, Si(CH₃)₂OSi(CH₃)₃, or, a C1-C20 optionally substituted univalent hydrocarbon group said hydrocarbon group optionally comprising one or several oxygen atoms,
   ∘ m is 1, 2, 3, 4 or 5, and
   ∘ p is 1, 2 or 3;
   provided that when the cyanoacrylate B has formula (I), then the total weight content of said cyanoacrylate B ranges from 5 % to 30% by weight based on the total weight of the composition;
- optionally a plasticizer,
   provided that when the composition comprises a plasticizer, its content is less than or equal to 12% by weight based on the total weight of the composition.

The term "optionally substituted" in the term "optionally substituted hydrocarbon group" means that one or more hydrogens on the hydrocarbon group may be replaced with a corresponding number of substituents preferably selected from halogen, nitro, azido, amino, carbonyl, ester, ether, sulfide, sulfate, sulfoxide, sulfone, and the likes.

The term "hydrocarbon group" refers to an organic group consisting of carbon and hydrogen. Examples of hydrocarbon group typically include an alkyl group (such as for example methyl, ethyl, propyl, butyl, pentyl, hexyl, isopropyl, isobutyl, terbutyl; an alkenyl (such as for example vinyl or allyl groups; an aralkyl group (such as for example benzyl, phenylethyl): an aryl group (such as for example phenyl).The term "Cx-Cy" means that it comprises from x carbon atoms to y carbon atoms. For example "C1-C8 group" is a group containing from 1 to 8 carbon atoms.

### n-heptylcyanoacrylate

N-heptylcyanoacrylate may be at least partially biobased, i.e. derived at least partially from renewable resources.

Preferably, the n-heptylcyanoacrylate has a biocarbon content equal to or higher than 30%, more preferably equal to or higher than 45%.

The terms "biocarbon" or "biobased carbon" indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 × 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-21, method B).

Synthesis of n-heptylcyanoacrylate may be performed according to methods known by the man skilled in the art. Knovenagel synthesis and crackless synthesis are typically used by the man skilled in the art. Batch or continuous distillations may be used, in presence of radical and acid stabilizers.

N-heptylcyanoacrylate is also commercially available from Bostik.

### Cyanoacrylate B

The composition may comprise one or several cyanoacrylates B.

The cyanoacrylate B of formula (I) may be selected from the group consisting of: 2-methoxyethyl cyanoacrylate, 2-ethoxyethyl cyanoacrylate, 2-propoxylethyl cyanoacrylate, 2-butoxyethyl cyanoacrylate, 2-(1-methoxy)propyl cyanoacrylate, 2-(2'-methoxy)-ethoxyethyl-2"-cyanoacrylate, 2-(2'-ethoxy)-ethoxyethyl-2"- cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate, 2-(2'-hexyloxy)-ethoxyethyl-2"-cyanoacrylate, 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate,2-(2'-hexyloxy)-propyloxypropyl-2"-cyanoacrylate, 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate, 2-(3'-methoxy)-propyloxyethyl-2"-cyanoacrylate, 2-(3'-methoxy)-butyloxyethyl-2"-cyanoacrylate, 2-(3'-methoxy)-propyloxypropyl-2"-cyanoacrylate, 2-(3'-methoxy)-butyloxypropyl-2"-cyanoacrylate, 2-(2'-methoxy)-ethoxypropyl-2"-cyanoacrylate, 2-(2'-methoxy)-ethoxybutyl-2"-cyanoacrylate, 1-(2-methoxy-1-methylethoxy) propyl-2-yl cyanoacrylate, 1-(2-methoxy-2-methylethoxy) propyl-2-yl cyannoacrylate, 2-(2-methoxy-2-methylethoxy) propyl-1-yl cyanoacrylate or 2-(2-methoxy-2-methylethoxy) propyl-1-yl cyanoacrylate and mixtures thereof.

Preferably, in the formula (I):
- R¹ represents C1-C8 alkylene group,
- R² is a C1-C20 alkyl group.

More preferably, in the formula (I):
- R¹ represents C2-C3 alkylene group,
- R² is a C1-C6 alkyl group.

Even more preferably, the cyanoacrylate B of formula (I) is methoxyethylcyanoacrylate.

When the cyanoacrylate B has formula (I) as defined herein, the content of n-heptylcyanoacrylate is preferably higher than or equal to 60% by weight, even more preferably higher than or equal to 70% by weight based on the sum of the weight content of n-heptylcyanoacrylate and cyanoacrylate B.

When the cyanoacrylate B has formula (I) as defined herein, the content of n-heptylcyanoacrylate is preferably higher than or equal to 60 % by weight, more preferably higher than or equal to 65% by weight, based on the total weight of the composition.

When the cyanoacrylate B has formula (I) as defined herein, the content of cyanoacrylate B ranges preferably from 10 to 30% by weight, even more preferably from 15% to 30% by weight, based on the total weight of the composition.

The cyanoacrylate B of formula (II) is preferably tetrahydrofurfurylcyanoacrylate When the cyanoacrylate B has formula (II) as defined herein, the content of n-heptylcyanoacrylate is preferably higher than or equal to 40% by weight based on the sum of the weight content of n-heptylcyanoacrylate and cyanoacrylate B.

When the cyanoacrylate B has formula (II) as defined herein, the content of n-heptylcyanoacrylate is preferably higher than or equal to 40 % by weight based on the total weight of the composition.

When the cyanoacrylate B has formula (II) as defined herein, the content of cyanoacrylate B ranges preferably from 30% to 60% by weight, even more preferably from 30% to 50% by weight, based on the total weight of the composition.

Preferably, the cyanoacrylate B is selected from the group consisting of: Methoxyethylcyanoacrylate (CAS 27816-23-5), ethoxyethylcyanoacrylate (CAS 21982-43-4), tetrahydrofurfurylcyanoacrylate, and mixtures thereof.

Even more preferably, the cyanoacrylate B is methoxyethylcyanoacrylate.

The cyanoacrylate B may be at least partially derived from renewable source. The cyanoacrylate B may have a biocarbon content equal to or higher than 30%, more preferably higher than 45%.

Methoxyethylcyanoacrylate (CAS 27816-23-5) and ethoxyethylcyanoacrylate (CAS 21982-43-4), tetrahydrofurfurylcyanoacrylate are in particular commercially available from Bostik.

### Optional thickener

Preferably, the composition comprises at least one thickener.

A suitable thickener or thickening agent may be selected from those which are compatible with the cyanoacrylate monomers contained therein (n-heptylcyanoacrylate and cyanoacrylate B).

More preferably, the thickener is selected from the group consisting of poly(meth)acrylates, polyvinylpyrrolidones, polyvinyl acetates, partially hydrolysed polyvinyl acetates, vinyl acetate copolymers, acylated cellulose polymers, ethylene-acrylic copolymers, and mixtures thereof.

The vinyl acetate copolymers may be copolymers of polyvinyl chloride and polyvinyl acetate, copolymers of polyethylene and polyvinyl acetate.

The copolymers typically include terpolymers. For example, copolymers ethylene-acrylic comprises terpolymers of ethylene-methylacrylate-carboxylic acid-based monomers.

Copolymers of polyethylene and polyvinyl acetate are typically commercially available under the tradename LEVAMELT by Lanxess. Examples are LEVAMELT^{®}400, LEVAMELT^{®} 600 and LEVAMELT^{®} 900. The LEVAMELT products typically differs in the amount of vinyl acetate present. For example, LEVAMELT^{®} 400 comprises an ethylene-vinyl acetate copolymer comprising 40 wt% vinyl acetate.

Examples of copolymers of polyvinyl chloride and polyvinyl acetate are VINNOL products commercialized by Wacker, such as for example Vinnol^{®} H40-60. It covers both copolymers and terpolymers.

Examples of copolymers of ethylene, acrylate (butyl or methyl) and carboxylic acid-based monomers are Vamac^{®} G or Vamac^{®} Ultra LT from DuPont.

The total content of thickener (including mixtures of thickener) in the composition may range from 2 wt.% to 18 wt.%, preferably from 3 wt.% to 12 wt.%, and more preferably from 4 wt.% to 10 wt.% based on the total weight of the composition.

The thickener is advantageously selected so as to be soluble in the mixture n-heptylcyanoacrylate and cyanoacrylate B.

Preferably, the thickener is selected from the group consisting of vinyl acetate copolymers, ethylene-acrylic copolymers, and mixtures thereof.

More preferably, the thickener is selected from the group consisting of copolymer of polyethylene and polyvinyl acetate, copolymers of polyvinyl chloride and polyvinyl acetate, copolymers of ethylene, methylacrylate and carboxylic acid-based monomers, and mixtures thereof.

### Optional additional ingredient

The composition may comprise at least one additional ingredient preferably selected from the group consisting of: an acid stabilizing agent, a radical stabilizing agent, an adhesion promoter, a thixotropic agent, a toughener, an accelerating agent, a filler, a plasticizer, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenebis (2,6-di-tert-butylphenol), and mixtures thereof.

The total content of radical stabilizing agent(s) in the composition, may range from 0% to 0.2% by weight, preferably from 0.001% to 0.1 % by weight based on the total weight of said composition.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, boron trifluoride etherate, p-toluenesulfonic acid, hydrofluoric acid, sulphur dioxide, and mixtures thereof.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

The content of accelerating agent in the composition may range from 0% to 1%, preferably from 0.1% to 1% by weight based on the total weight of the composition.

Typically, an adhesion promoter may be chosen from the group consisting of aromatic carboxylic acid or anhydride, and preferably from the group consisting of trimellitic acid, trimellitic anhydride, cis-1,2,3,6-tetrahydrophthalic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of adhesion promoter(s) in the composition may range from 0.005 wt.% to 0.1 wt.%, preferably from 0.01 wt.% to 0.05 wt.% based on the total weight of the composition.

A suitable thixotropic agent may be selected from the group consisting of hydrogenated castor oil optionally modified by reaction with an amine, polyamides, silica, and mixtures thereof.

Preferably, the thixotropic agent is silica, more preferably fumed silica, even more preferably hydrophobic fumed silica. Hydrophobic fumed silica may also acts as a filler. A hydrophobic fumed silica is commercially available under the commercial denomination Aerosil^{®} R202 from Evonik.

If present, the composition may comprise from 2% to 10% by weight, preferably from 3% to 9% by weight, more preferably from 7% to 9% by weight, of thixotropic agents by total weight of the composition.

Suitable tougheners or toughening agents may be block copolymers such as, for example, polymethylmethacrylate-co-polybutylacrylate-co-polymethylmethacrylate, for example commercially available as Kurarity LA2140; elastomeric rubbers; elastomeric polymers; liquid elastomers; polyesters; acrylic rubbers; butadiene/acrylonitrile rubber; Buna rubber; liquid rubbers (such as for example the ones marketed by Kuraray, LIR-50, LlR-403;LIR410); polyisobutylene; polyisoprene; natural rubber; synthetic rubber such as for example styrene/butadiene rubber (SBR); polyurethane polymers; fluorinated rubbers; isoprene-acrylonitrile polymers; chlorosulfonated polyethylenes; block copolymers; core-shell rubber particles (such as clearstrength^{®} XT150), and mixtures thereof.

Typically, the content of toughening agent in the composition ranges from 1 wt.% to 15 wt.%, preferably from 3 wt.% to 8 wt.%, and more preferably from 4 wt.% to 7 wt.% based on the total weight of the composition.

The plasticizer may be any plasticizer comprising at least one ester group. The plasticizer may be selected from the group consisting of: phthalates, azelates, adipates, alkyl sebacates, and mixtures thereof.

The plasticizer may be selected from trimethyl trimellitate, diethylene glycol dibenzoate, diethyl malonate, triethyl-O-acetyl citrate, benzylbutylphtalate, dipropylene glycol dibenzoate, diethyl adipate, tributyl-O-acetyl citrate, dimethyl sebacate, and mixtures thereof.

The composition may either not comprise any plasticizer (content = 0%, so it is an optional ingredient), or the composition may comprise a plasticizer but in a weight content less than or equal to 12% by weight based on the total weight of the composition.

Preferably, the content of plasticizer is less than or equal to 8 % by weight based on the total weight of the composition.

Even more preferably, the content of plasticizer is less than or equal to 2% by weight based on the total weight of the composition.

Preferably, the composition does not comprise plasticizer comprising at least one ester group.

More preferably, the composition does not comprise plasticizer.

Preferably, the total content of additional ingredient(s) in the composition is lower than 5 % by weight, even more preferably lower than 2 % by weight based on the total weight of the composition.

### Composition

Preferably, the composition has a viscosity ranging from 50 to 7000 mPa.s at 25°C.

More preferably, the composition has a viscosity ranging from 100 to 1000 mPa.s at 25°C.

Even more preferably, the composition has a viscosity ranging from 100 to 300 mPa.s at 25°C.

The viscosity may be measured according to the ASTM D3236 standard and in a Brookfield viscometer, in particular with a Brookfield DVNext Spindle 52z at 100 rpm.

Preferably, the composition has a biocarbon content equal to or higher than 30%, even more preferably higher to or equal to 40%. The biocarbon content is measured as defined above.

Preferably, the composition is one-part composition.

The composition according to the invention has preferably a glass transition temperature ranging from 40°C to 120°C, more preferably from 50°C to 115°C, even more preferably from 80°C to 112°C.

The glass transition temperature may be measured by dynamic mechanical thermal analysis according to ISO 6721 : 2012.

The composition according to the invention exhibits preferably a storage modulus at 25°C ranging from 10 to 300 MPa, more preferably from 50 to 150 MPa at 25°C.

The storage modulus may be measured by dynamic mechanical thermal analysis according to ISO 6721.11:2012.

Preferably, the composition does not comprise n-butylcyanoacrylate, sec-butylcyanoacrylate, iso-butylcyanoacrylate, or tertbutylcyanoacrylate.

Preferably, the composition does not comprise octylcyanoacrylate.

Preferably, the composition does not comprise isoamylcyanoacrylate.

Preferably, the composition does not comprise 2-methylbutylcyanoacrylate.

Preferably, the composition does not comprise 2-ethylhexylcyanoacrylate.

Preferably, the composition does not comprise methylcyanoacrylate.

Preferably, the composition does not comprise n-propylcyanoacrylate.

Preferably, the composition does not comprise iso-propylcyanoacrylate.

Preferably, the composition does not comprise ethylcyanoacrylate.

Preferably, the composition does not comprise n-pentylcyanoacrylate.

Preferably, the composition does not comprise 1-ethylpropyl cyanoacrylate.

Preferably, the composition does not comprise neopentyl cyanoacrylate.

More preferably, the composition does not comprise alkylcyanoacrylate other than n-heptylcyanoacrylate.

More preferably, the composition does not comprise other cyanoacrylate than n-heptylcyanoacrylate and cyanoacrylate B as defined herein.

Preferably, the composition does not comprise bis-silane. More preferably, the composition does not comprise silane.

Preferably, the composition does not comprise radical photoinitiator or metallocene compound.

Preferably, the composition does not comprise glass particles.

The composition preferably comprises:
- n-heptylcyanoacrylate;
- from 10 to 30 % by weight of a cyanoacrylate B of formula (I);
- from 2% to 18% by weight of thickener;
- optionally a plasticizer, provided that when the composition comprises a plasticizer, its content is less than or equal to 12% by weight based on the total weight of the composition,
said composition having a viscosity ranging from 100 to 1 000 mPa.s at 25°C.

The composition preferably comprises:
- n-heptylcyanoacrylate;
- from 10 to 30% by weight of methoxyethylcyanoacrylate,
- from 4% to 10% by weight of thickener selected from the group consisting of polyvinyl acetates, partially hydrolyzed polyvinyl acetates, copolymers of polyvinyl chloride and polyvinyl acetate, copolymers of polyethylene and polyvinyl acetate, copolymers of vinyl chloride and acrylonitrile, ethylene-acrylic copolymers, and mixtures thereof;
- optionally a plasticizer, provided that when the composition comprises a plasticizer, its content is less than or equal to 12% by weight based on the total weight of the composition,
said composition having a viscosity ranging from 100 to 500 mPa.s at 25°C.

The composition of the invention may be prepared by mixing of the ingredients at 25°C.

The composition of the invention advantageously exhibits at least one of the following properties:
- High glass transition temperature Tg, for example from 40 to 120°C;
- Appropriate viscosity to advantageously stay on the spot where dispensed in the device;
- Fast cure ;
- Low blooming ;
- Good adhesive joint resistance at high temperature (for example at 85°C) and high relative humidity (for example 85%) ;
- Shelf stability (no insoluble particles that might be source of polymerization);
- tensile strength on Alu of at least 9 MPa;
- good resistance to impact (for example a drop test of at least 50 cm);
- a smooth failure mode in Tpeel testing on MS.

### Uses

The present invention also concerns the use of the composition as defined above for bonding substrates or for coating an article.

The present invention also concerns a method for bonding substrates comprising the steps of:
- applying the composition as defined herein to at least one of the substrates,
- mating together the substrates for a time sufficient to permit an adhesive bond to form between the mated substrates;
- optionally heating the mated substrates, in particular to a temperature higher than 100°C.

The present invention also relates to the use of the composition as defined above in an electric device, electronic device, optical device, medical device, luxury item, and in automotive.

The electronic device may be selected from the group consisting of light emitting devices, computer devices, In vehicle Infotainment (IVI), mobile phones, a GPS unit, tablets, touch screens, headset...

Preferably, the electronic device is mobile phone or a headset (including True Wireless Stereo, TWS).

The electric device may be selected from the group consisting of control device (for example for motor vehicle), electrical battery (preferably automotive electrical battery).

The optical device may be an image display device or an illumination device. Examples of image display device include for example liquid crystal display, an organic EL diode-Luminescent display. Examples of illumination device include organic EL illumination.

Preferably, the composition as defined herein is used for bonding substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also relates to the use of the composition as defined above for improving the lifetime of a joint preferably in an electronic, electric, optical or medical device.

Preferably, the above-mentioned use is for reducing (more preferably avoiding) blooming preferably in an electronic, electric, optical or medical device.

The present invention also relates to a method for improving the lifetime of a joint of electronic, electric, optical or medical component, said method comprising using the composition as defined above.

Preferably, the method is further for reducing (more preferably avoiding) blooming in said electronic, electric, optical or medical device.

Preferably, the joint is an adhesive joint.

Preferably, the composition as defined herein is used for bonding substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also concerns an electronic, electric, optical or medical device comprising at least one joint formed from the composition as defined above.

Preferably, the joint is formed between substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The above-mentioned paragraphs can be combined one with each other. For examples, the preferred embodiments for the compositions can be combined all together, and combined with the preferred embodiments of the uses.

The ranges disclosed in this description include both the lower and the upper limit thereof. For example, the expressions "ranging from x to y" or "between x and y" comprises the limits x and y.

### Examples

The following ingredients were used to prepare the compositions:
n-heptylcyanoacrylate commercialized by Bostik
Methoxyethyl Cyanaocrylate: MECA commercialized by CMC as CMC1024
SO₂ commercialized by Carburos Metalicos, S.A.
PMMA (polymethylmethacrylate): Degacryl^{®} 449 commercialized by Evonik
VinnolOH40/60: thickener copolymer of polyvinylchloride and polyvinylacetate commercialized by Wacker
THFCA : tetrahydrofurfurylcyanoacrylate commercialisé par Bostik
Levamelt^{®}700: thickener copolymer of polyethyl and polyvinylacetate commercialized by Arlanxeo
Vamac^{®} G : copolymer of ethylene, methylacrylate, and acrylic acid based monomer from DuPont
Aerosil^{®} R202 : hydrophobic fumed silica commercialized by Evonik
Accelerator: Dibenzo 18 Crown 6, commercialized by Alfa Aesar

The following products were obtained from Sigma Aldrich Merck: Methanesulfonic Acid, 4-methoxyphenol (MEHQ), citric acid.

Grit blasted mild steel (GBMS) lapshears (for all mechanical testing) purchased from ROcholl Mild steel (MS) lapshears (for fixture time assessment) purchased from ROcholl Aluminium 5754 (ALU) purchased from Rocholl

### Example 1: preparation of the compositions

The compositions were prepared by mixing all ingredients at 25°C, except the thickeners, that were added in small portions, after all the other ingredients, at 60-70°C, during 1-2 hours, and under stirring. The following table discloses the content (% by weight) and nature of ingredients of the compositions.

| | **Composition 1 (invention)** | **Composition 2 (invention)** | **Composition 3 (invention)** |
|---|---|---|---|
| **MECA** | QS 100% | QS 100% | - |
| **THFCA** | - | - | 46.86% |
| **N-heptylcyanoacrylate** | 70.3% | 71.3% | 46.86% |
| **Stabilizer 1: MEHQ** | 0.05% | 0.05% | 0.05% |
| **Stabilizer 2:** | 6 ppm | 6 ppm | - |
| **methane sulfonic acid** | | | |
| **Accelerator** | 0.2% | 0.2% | 0.2% |
| **PMMA Degacryl^{®} 449** | - | 1.5 % | - |
| **Citric Acid** | 0.01% | 0.03% | 0.03% |
| **Levamelt^{®}700** | 6% | - | 6% |
| **VAMAC^{®}G** | - | 3% | - |
| **total** | 100% | 100% | 100% |

### Example 2 : properties

The following methods were used to assess the performance of the compositions:
The viscosity of compositions were measured according to the ASTM D3236 standard and in a Brookfield viscometer DVNext Spindle 52z at 100 rpm .

Tensile shear strength test data reflect bond strength measured in MPa after assembling overlapping lapshears (standard test pieces of grit blasted mild steel (GBMS)) with a contact area of 250 mm², measured according to ASTM D1002. The bonded lapshears were first clamped at 23 °C ± 2 °C under 50% relative humidity (RH) and 'rested' for 24 h at 23°C ± 2 °C after assembly before testing. Testing for joint durability was performed on GBMS/GBMS lapshears in 85%HR/85°C standard humidity chambers after 100 hours or 250 hours. This is a harsh test of 250 hours that tend to anticipate degradation of the adhesive for the next 5 years. The test is mentioned in many manufacturers guideline for example in GB/T 2423.50 [Environmental Test Part 2: Test Method Test Cy Constant Humidity and Heat is mainly used for accelerated test of components].

Blooming was qualitatively assessed by putting a drop of the adhesive composition on top of a black ABS (acrylonitrile-butadiene-styrene) in a 98%HR / 40°C oven. The more the vapor generated polymerization around the drop the more the blooming. A visual estimation of whitish area is used to estimate the blooming.

Drop test was assed using Alu/Alu lapshears. The bonded lapshears were first clamped and 'rested' for 24 h at 23°C ± 2 °C after assembly before testing. Bonded lapshears without clamp were dropped parallel to the marble ground at 30cm, 60cm, 90 cm and 120 cm. 4 bonded lapshears assemblies per height were tested. 3 drops per height were performed. If failure of one bonded assembly the sample is considered to not withstand that height (drop test below 30cm).

ISO11339 was followed for measuring 180° Tpeel: Mild steel (MS) Lasphears from Rocholl Dimensions: 150 mm length; Width 25 mm; speed 100 mm/min. Failure mode was reported depending on the angle of the lapshears under peel strength. Stick-slip is when failure was not constant but with peaks; smooth failure was reported when tape-like constant failure was observed.

### Dispensability :

Dispensability was assessed using setup described in the white paper "Making high precision dispensing of cyanoacrylates in manufacturing possible" published on the 8^{th} of februrary 2023 on https://born2bond.bostik.com website. A viscotec volumetric pump was supplied by adhesive composition in 30cc Nordson cartridges.

The adhesive was deposited on top of aluminium lapshears and estimation of bead size after dispensing was used to determine its dispensability, a key aspec to be suitable in the electronics bonding applications.

Glass transition was measured by dynamic mechanical thermal analysis according to ISO 6721 : 2012 (more specifically parts 1, 5, 11).

Typically, part 1 of the standard specifies methods for determining the dynamic mechanical properties of rigid plastics within the region of linear viscoelastic behavior. The part 5 describes the specific test method for the flexural test. Part 11 specifies methods for determining a value of the glass transition temperature (Tg) from the dynamic mechanical properties measured during a linear temperature scan under heating conditions.

According to these standards, a flexural vibration method may be used to determine the components of Young's complex modulus (storage modulus, loss modulus, and tan delta) of the sample at a specific frequency in the range of 0.01 Hz to 100 Hz as a function of temperature. From these data, a value for the glass transition will be determined.

The following setup were used:
Dynamic Mechanical Analyser DMAQ800 from TA Instrument.
Mode of Deformation: 3-point-bending test.
Frequency 1 Hz.
Oscillation strain imposed 0.05% (calculated to be within the linear viscoelastic range).
Static Force 0.01 N
Heating/cooling rate: 2 °C/min.
Temperature Range: -70°C to 150°C.
Clamp/Mode deformation: 3-point-bending clamp (low friction).

| | **Composition 1 (invention)** | **Composition 2 (invention)** | **Composition 3 (invention)** |
|---|---|---|---|
| **Blooming** | Low | Low | Low |
| **Viscosity** | 135 mPa·s | 75 mPa·s | 229 mPa·s |
| **Aspect after** 1 **Month at 25°C in 20g HDPE bottle** | ok | ok | ok |
| **Dispensability** | ok | ok | ok |
| **Initial value: Tensile shear after 24 hours** on **Alu (MPa)** | 13.8 ± 1.6 | 10.2 ± 0.3 | 14.8 ± 0.8 |
| **Tpeel on mild steel (N/mm) (failure mode)** | 1.0 ± 0,4 (smooth) | 2.1 ± 0.4 (smooth) | 1.2 ± 0.1 (smooth) |
| **Drop test** | >90 cm | >90 cm | >120 cm |
| **Tensile** shear **85°C and 85% RH** | Bond maintained after 250 hours | Bond maintained after 250 hours | Bond maintained after 250 hours |

The compositions 1, 2 and 3 (invention) advantageously exhibit low blooming which is of interest in the area of industrial adhesives: there will be no or very low whitening on the bonded substrates. Besides, they exhibit a Tpeel strength advantageously higher than 0.8 N/mm on mild steel, with a smooth constant failure (versus a stick-slip irregular failure). This is highly advantageous in applications as resistance to peel-like debonding forces of the adhesive joint will be superior. Generic cyanoacrylate generally resists very poorly to peel solicitation leading to a sudden debonding of the full assembly.

In addition, they exhibit a good resistance to impact (drop test), and exhibit a good resistance to hard conditions (bond is still strong after 250 hours at 85°C/85% RH).

Tensile strengths are also advantageously of more than 9MPa, generally considered as a threshold for structural adhesives. Overall the compositions are highly durable and present low blooming.

## Claims

1. Composition comprising:
- n-heptylcyanoacrylate;
- a cyanoacrylate B having the following formula (I) or (II): 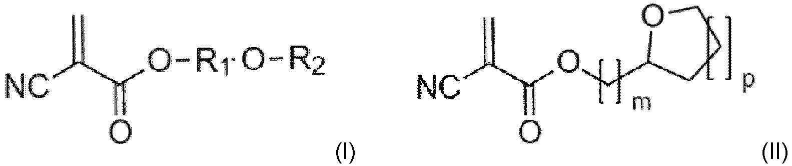 wherein:
∘ R¹ represents C1-C8 optionally substituted divalent hydrocarbon group,
∘ R² is Si(CH₃)₃, Si(CH₃)₂OSi(CH₃)₃, or, a C1-C20 optionally substituted univalent hydrocarbon group said hydrocarbon group optionally comprising one or several oxygen atoms,
∘ m is 1, 2, 3, 4 or 5, and
∘ p is 1, 2 or 3;
provided that when the cyanoacrylate B has formula (I), then the total weight content of said cyanoacrylate B ranges from 5 % to 30% by weight based on the total weight of the composition, and
- optionally a plasticizer,
provided that when the composition comprises a plasticizer, its content is less than or equal to 12% by weight based on the total weight of the composition.

2. Composition according to claim 1, wherein the cyanoacrylate B of formula (I) is selected from the group consisting of: 2-methoxyethyl cyanoacrylate, 2-ethoxyethyl cyanoacrylate, 2-propoxylethyl cyanoacrylate, 2-butoxyethyl cyanoacrylate, 2-(1-methoxy)propyl cyanoacrylate, 2-(2'-methoxy)-ethoxyethyl-2"-cyanoacrylate, 2-(2'-ethoxy)-ethoxyethyl-2"- cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate, 2-(2'-hexyloxy)-ethoxyethyl-2"-cyanoacrylate, 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate,2-(2'-hexyloxy)-propyloxypropyl-2"-cyanoacrylate, 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate, 2-(3'-methoxy)-propyloxyethyl-2"-cyanoacrylate, 2-(3'-methoxy)-butyloxyethyl-2"-cyanoacrylate, 2-(3'-methoxy)-propyloxypropyl-2"-cyanoacrylate, 2-(3'-methoxy)-butyloxypropyl-2"-cyanoacrylate, 2-(2'-methoxy)-ethoxypropyl-2"-cyanoacrylate, 2-(2'-methoxy)-ethoxybutyl-2"-cyanoacrylate, 1-(2-methoxy-1-methylethoxy) propyl-2-yl, 1-(2-methoxy-2-methylethoxy) propyl-2-yl, 2-(2-methoxy-2-methylethoxy) propyl-1-yl or 2-(2-methoxy-2-methylethoxy) propyl-1-yl and mixtures thereof.

3. Composition according to claim 1, wherein in formula (I):
- R¹ represents C1-C8 alkylene group,
- R² is a C1-C20 alkyl group.

4. Composition according to anyone of claims 1 to 3, wherein:
- when the cyanoacrylate B has formula (I), the content of n-heptylcyanoacrylate is higher than or equal to 60% by weight, preferably higher than or equal to 70% by weight based on the sum of the weight content of n-heptylcyanoacrylate and cyanoacrylate B; or
- when the cyanoacrylate B has formula (II), the content of n-heptylcyanoacrylate is higher than or equal to 40% by weight based on the sum of the weight content of n-heptylcyanoacrylate and cyanoacrylate B.

5. Composition according to anyone of claims 1 to 4, wherein:
- when the cyanoacrylate B has formula (I), the content of n-heptylcyanoacrylate is higher than or equal to 60 % by weight, preferably higher than or equal to 65% by weight, based on the total weight of the composition;
or
- when the cyanoacrylate B has formula (II), the content of n-heptylcyanoacrylate is higher than or equal to 40 % by weight based on the total weight of the composition.

6. Composition according to anyone of claims 1 to 5, wherein:
- when the cyanoacrylate B has formula (I), the content of cyanoacrylate B ranges from 10 to 30% by weight, preferably from 15% to 30% by weight, based on the total weight of the composition;
or
- when the cyanoacrylate B has formula (II), the content of cyanoacrylate B ranges from 30% to 60% by weight, preferably from 30% to 50% by weight, based on the total weight of the composition.

7. Composition according to anyone of claims 1 to 6, wherein the cyanoacrylate B has formula (I).

8. Composition according to anyone of claims 1 to 7, wherein the cyanoacrylate B is methoxyethylcyanoacrylate.

9. Composition according to anyone of claims 1 to 8, wherein it comprises at least one thickener.

10. Composition according to anyone of claims 1 to 9, wherein the thickener is selected from the group consisting of poly(meth)acrylates, polyvinylpyrrolidones, polyvinyl acetates, partially hydrolysed polyvinyl acetates, vinyl acetate copolymers, acylated cellulose polymers, ethylene-acrylic copolymers, and mixtures thereof.

11. Composition according to anyone of claims 1 to 10, wherein the total content of thickener (including mixtures of thickener) in the composition ranges from 2 wt.% to 18 wt.%, preferably from 3 wt.% to 12 wt.%, and more preferably from 4 wt.% to 10 wt.% based on the total weight of the composition.

12. Composition according to anyone of claims 1 to 11, wherein the thickener is selected from the group consisting of vinyl acetate copolymers, ethylene-acrylic copolymers, and mixtures thereof.

13. Composition according to anyone of claims 1 to 12, wherein it further comprises at least one additional ingredient selected from the group consisting of: an acidic inhibitor, a radical stabilizing agent, an adhesion promoter, a thixotropic agent, a toughener, an accelerating agent, a filler, a plasticizer, and mixtures thereof.

14. Composition according to anyone of claims 1 to 13, wherein the content of plasticizer is less than or equal to 8 % by weight, preferably less than or equal to 2% by weight based on the total weight of the composition.

15. Composition according to anyone of claims 1 to 14, wherein the composition has a viscosity ranging from 50 to 7000 mPa.s at 25°C.

16. Composition according to anyone of claims 1 to 15, wherein the composition has a viscosity ranging from 100 to 300 mPa.s at 25°C.

17. Composition according to anyone of claims 1 to 16, wherein the composition has a glass transition temperature ranging from 40°C to 120°C, preferably from 50°C to 115°C, more preferably from 80°C to 112°C.

18. Composition according to anyone of claims 1 to 17, wherein the composition does not comprise other cyanoacrylate than n-heptylcyanoacrylate and cyanoacrylate B.

19. Composition according to anyone of claims 1 to 15, 17 or 18, comprising:
- n-heptylcyanoacrylate;
- from 10 to 30% by weight of methoxyethylcyanoacrylate,
- from 4% to 10% by weight of thickener selected from the group consisting of polyvinyl acetates, partially hydrolyzed polyvinyl acetates, copolymers of polyvinyl chloride and polyvinyl acetate, copolymers of polyethylene and polyvinyl acetate, copolymers of vinyl chloride and acrylonitrile, ethylene-acrylic copolymers, and mixtures thereof;
- optionally a plasticizer, provided that when the composition comprises a plasticizer, its content is less than or equal to 12% by weight based on the total weight of the composition,
said composition having a viscosity ranging from 100 to 500 mPa.s at 25°C.

20. Use of the composition according to anyone of claims 1 to 19, for bonding substrates or for coating an article.

21. Use of the composition according to anyone of claims 1 to 18 in an electric device, electronic device, optical device, medical device, luxury item, and in automotive.
